# EUROPEAN PATENT APPLICATION

(11) **EP 2 781 607 A1**
(43) Date of publication of application: **24.09.2014**
(21) Application number: 13160095.9
(22) Date of filing: 20.03.2013
(51) Int. Cl.: C21C 5/46, B22D 2/00, G01N 1/12

(54) **Sampler for molten iron**

(71) Applicant: Heraeus Electro-Nite International N.V., 3530 Houthalen (BE)
(72) Inventor: Knevels, Johan, 3960 Bree (BE); Truyen, Jos, 3941 Eksel (BE)
(74) Representative: Kühn, Hans-Christian

(57) **Abstract**

The invention refers to a sampler for molten metal, in particular for molten iron and molten white cast iron, comprising a sample chamber having a sample chamber opening and further comprising a mixing chamber having an outer inlet opening, whereby the sample chamber opening is arranged between the mixing chamber and the sample chamber, and is characterized in that a graphite promoter, zirconium or zirconium hydride, and a carbide stabilizing material selected from one or more of the group consisting of tellurium, bismuth, selenium and cerium are arranged in the mixing chamber.

## Description

The invention is related to a sampler for molten metal, in particular for molten iron and molten cast iron, comprising a sample chamber having a sample chamber opening and further comprising a mixing chamber having an outer inlet opening, whereby the sample chamber opening is arranged between the mixing chamber and the sample chamber.

During the metallurgical processing of molten iron, it is advantageous to extract a sample of metal to determine its chemical constituents for use in further processing. In one such process, the production of steel from blast furnace iron is greatly improved using thermodynamic modeling of the basic oxygen furnace process requiring accurate mass and material balances for all raw material inputs. The chemical laboratory of a steelmaker has a variety of analytical equipment to determine the elemental composition of these raw materials, in particular, samples of blast furnace iron containing high concentrations of carbon and silicon.

It is known from the art that during cooling of molten iron into a solid sample for analysis it can undergo a multitude of precipitation reactions resulting in different solidification structures due to the chemical composition of the iron and the rate of cooling the liquid metal following sampling. The dominant solidification structures receive their names from the appearance of the fracture surface due to the form of carbon in the as cast metal.

For high carbon irons, at or above the eutectic composition, carbon will precipitate out of solution during cooling in the form of graphite flakes giving rise to its appearance and name, grey iron. J.W. Boyes et.al., Chill and Mottle Formation in Cast Iron, B.C.I.R.A. Journal No.4, vol. 12, July 1964 teaches that in iron compositions less than the eutectic composition, grey iron can still be produced when the metal contains graphite promoters, i.e. elements such as silicon that when present in appropriate compositions aid the solidification towards a grey iron structure.

Another solidification structure occurs during rapid cooling of the iron when the dissolved carbon precipitates as carbide, termed white or chilled iron as a result of its appearance. White or chill iron occurs when cast iron solidifies by precipitation of the iron carbide/austenite eutectic. For a white structure to form, the dominant grey iron eutectic must be suppressed by undercooling to a temperature below the white iron eutectic. The extent of such cooling must be such that the white iron eutectic composition is nucleated and grows in preference to the grey iron eutectic. In order to enhance white solidification often high mass and/or high conductivity solid metals form the molds in which the iron is cast providing the necessary chill. Characterizes of a white iron solidification are a very rapid, high cooling rate and a sufficient number of nucleation sites traditionally introduced by a process called inoculation. J.W. Boyes et.al., Chill and Mottle Formation in Cast Iron, B.C.I.R.A. Journal No.4, vol. 12, July 1964 also teaches that white iron can result due to the presence of carbide promoters and nucleation agents that when present in appropriate compositions aid the solidification towards a white iron structure.

During solidification of an iron desired to result in a white iron structure there could be instances where the suppression by chilling is insufficient or too late such that graphite precipitation has begun. In this case, the metal will chill with a white structure but interspersed with graphite. This is termed mottle iron, neither grey not white, whose characteristics vary depending upon the rate of early cooling and the degree of inoculation.

Blast furnace iron contains the maximum carbon content as a function of its temperature and could contain a substantial quantity of silicon. H. LaPlanche, Les Diagrammes de Structure Finale des Pieces de Fonte, Fonderie no. 297, Jan. 1971, p.1-19, the LaPlanche diagram, can be used to illustrate the type of solidification structure of iron as a function of the carbon and silicon content. From this information one can readily determine that blast furnace irons have a strong tendency to solidify in a grey iron structure.

It is generally known in the industry that a molten metal sample which would normally solidify as grey iron may be caused to solidify as white iron by using heavy metal chill plates as taught by US 3,406,736. The problem associated with this approach is that the sample obtained may not be uniformly white throughout. Within the same sample there may be a white surface layer where the rate of cooling was high against the cold chill plates, a layer of mottled iron where little cooling capacity remained in the chill plates and during final solidification transitioning to a largely grey iron interior as a result carbon enrichment due to carbon segregation in advance of the solidification front. According to US 5,057,149, introducing a carbide stabilizer, such as tellurium metal, greatly improves the opportunity to obtain white iron however a guarantee of always a white iron structure is limited by the efficiency of the addition for various conditions at the time of the sampling. The result is that the depth of the white iron layer may vary depending upon the sampled metal carbon content, the molten metal temperature at the time of sampling, the heat capacity of the chilling plates or the presence of any of the numerous graphite promoting elements similarly found in blast furnace or hypereutectic cast iron.

The chemical laboratory of a steel maker has analytical equipment and in the case of spectrographic, optical emission spectroscopy, requiring a surface grinding of the sample. If the depth of the white chill layer in the sample is insufficient to provide a white structure after surface grinding and/or milling preparation, the presence of graphite will result in significant errors in the sample analysis can occur according to H. LaPlanche, Les Diagrammes de Structure Finale des Pièces de Fonte, Fonderie no. 297, Jan. 1971, p.1-19. Because of the tendency for analysis errors of non-uniform white iron samples, it is prudent for the metallurgists to obtain additional samples to analyze using alternate equipment such as a Leco Combustion Analyzer as detailed in metal testing procedure ASTM E 1019. This places a higher cost of analysis due to extra samples, equipment and manpower to provide timely data during metal processing that could have been obtained with a single sample if the laboratory was confident in a graphite free sample.

It is well known if the industry to add a carbide stabilizing element such as tellurium to promote white solidification. FR 2.171.627 teaches the use of a twisted aluminum foil capsule of tellurium 17 positioned in the space 16, between the end walls of caps 11 and 12, caps of metal such that once cap 13 melts the opening 15 of cap 12 exposes the capsule to the molten metal. The foil rapidly melts exposing the powdered tellurium and molten metal flows in the direction of 18, into the chamber formed by cap member 11. Since the foil capsule must disintegrate first before metal can pass, the majority of the tellurium enters with the first metal and flows unimpeded through channel 7 into the sample chamber. Further US 8,141,439 discloses use of tellurium to promote white solidification.

A very creative distributed alloying means in US 5,057,149, teaches the possibility to add tellurium 20, sandwiched between metal caps 18 and 22, directly into the inlet of a sample device in such a manner as only a portion of the additive is released when exposed to the metal as it enters the inlet during the filling of the sample.

Although sufficient for certain concentrations of carbon, these devices will from time to time exhibit insufficient carbide stabilization as taught by US 4,029,140 who when struggling with the same observations concluded that a tellurium addition alone could not guarantee 100 percent white solidification for metals of high carbon content or irons of containing high graphite promoting elements.
It was taught that hydrated materials added to the liquid metal increased the range in which carbide was formed.

It is well known that besides carbon, the element next influential in promoting graphite is silicon as taught by US 2,253,502. It is described that the amount of tellurium necessary to bring about a white solidification at a given carbon content can be related to the dissolved graphite promoting elements the element with the greatest effect being silicon.

This dependence upon silicon is highlighted in the diagram of LaPlanche where in the range of carbon of blast furnace iron, 4-5 % by weight; the tendency to form a type I graphite shape factor, (white structure) is difficult above 1% by weight silicon.

The prior art failed to produce a metallurgical graphite free sample for spectrographic analysis as a result of failing to achieve white solidification by depending solely upon additions of tellurium for carbide stabilization.

The poor performance of the prior art in guaranteeing a white solidification is never more apparent than in the case of blast furnace produced irons and hot metal treatment processes. Here both the carbon and the silicon concentrations are high and the temperature range at which a sample is desired is broad. The role of chill plates to promote white solidification is greatly diminished as the temperature is increased. The heat content of the metal above the heat of fusion, (solidification) cannot be fully dissipated unless chill plates of unwieldy heavy sections are used. The economics and utility of such a sampling system have been shown to be inadequate for everyday use.

The problem of this invention is to provide a white iron sample from high carbon, high silicon blast furnace iron by alloying a carbide stabilizer and zirconium metal such that the metallographic sample obtained is free from graphite precipitates throughout its cross section in order to provide the analytical laboratory a single spectrographic sample which can be accurately analyzed for all elements of interest on an optical emission spectrometer.

The problem of the invention is solved by a sampler for molten metal, in particular for molten iron and molten cast iron, comprising a sample chamber having a sample chamber opening and further comprising a mixing chamber having an outer inlet opening, whereby the sample chamber opening is arranged between the mixing chamber and the sample chamber, **characterized in that** a graphite promoter and a carbide stabilizing material selected from one or more of the group consisting of tellurium, bismuth, selenium and cerium are arranged in the mixing chamber. It is preferred that the carbide stabilizing material and the graphite promoter are arranged in a capsule which is arranged in the mixing chamber. In particular that the capsule can be made of glass or of metal, preferably of a metal having a melting point of up to 1350°C, preferably the capsule is made of tin.

The graphite promoter can be selected from the group consisting of zirconium and zirconium hydride. Advantageously the graphite promoter is present as powder, granules or strips. Further it is preferred that the carbon stabilizing material is present as powder or granules. Preferably the carbide stabilizing material amounts to 25 - 75 % by weight, preferably to 50 % by weight, of the total amount of the carbide stabilizing material and the graphite promoter. The total amount of the carbide stabilizing material and the graphite promoter is preferably from 0,5 to 1,75 % by weight, in particular from 1 to 1,5 % by weight of the metal contained in the filled sample chamber.

At the sample chamber opening a delay plate can be arranged. The delay plate (closing the sample chamber opening) can be made of steel, preferably having a thickness of 0,01 to 0,1 mm.

Those skilled in the art of promoting white solidification are aware of certain elements present in blast furnace and casting iron or those elements alloyed to iron or occurring as tramp elements which are detrimental towards white solidification. Lists of these elements are compiled in numerous technical publications such as [J.W. Boyes et.al., Chill and Mottle Formation in Cast Irons, B.C.I.R.A. Journal No.4, vol. 12, July 1964; H. LaPlanche, Les Diagrammes de Structure Finale des Pieces de Fonte, Fonderie no. 297, Jan. 1971, p.1-19; F.C. Campbell, Elements of Metallurgy and Engineering Alloys, ASM International, 2008, p. 453; F. Neumann, The Influence of Additional Elements on the Physico-Chemical Behavior of Carbon in Carbon Saturated Molten Iron, Recent Research on Cast Iron, Gordon & Breach Science Publishers, 1968, p. 659-705; M. A Chi 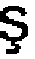 smera, et.al., Preconditioning of Electrically Melted Gray Cast Irons, U.P.B. Sci. Bull., Series B, Vol. 71, Iss. 3, (2009), as well as patents such as US 2,253,502, US 2370225 and US 2,661,281.

Prior art teaches that zirconium is a known graphite promoter. The unexpected result in this invention is that the presence of zirconium at the time of the addition of tellurium aids in the efficiency of tellurium for carbide stabilization could not have been anticipated. Also, since zirconium has a very high melting temperature it would not be obvious that zirconium could be alloyed into the metal during the very brief time it co-exists within the mixing cavity before the delay plate melts.

High carbon cast iron was prepared in an induction furnace melt cast to which was added ferrosilicon until the composition was C = 3,5 - 4 % by weight, Si = 2 - 3 % by weight. The addition of FeSi increases the Si content (deeper in the grey zone of the LaPlanche diagram) and increases the inoculation of the iron which also is well known in promoting graphitization of the iron.

Tests are conducted at 1350 °C and 1500 °C. These test temperatures are typical of what one may encounter in an average blast furnace iron production facility where 1350 °C is the average temperature of a hot metal ladle at the onset of desulfurization and where 1500 °C is the average temperature of an iron torpedo car where the majority of sampling occurs.

The tendency of grey solidification is tested by sampling the metal with the disclosed sampling device without the capsule of carbide promoting material. In this instance, the solidification occurs between two steel plates so that the depth of chill is a solely result of mass of the chill plates. This chilling rate is mainly a function of thickness of the sample and the cooling of the 4mm steel plates of the sampler. The metal sample is retrieved and fractures. The fracture surface is accessed to the degree of graphitization. In this range of C and Si, a deep grey will be observed.

The criteria to judge the samples for a good white solidification (minimum graphite precipitation) are :
1. Visual: observation of the fracture surface, the appearance has to have a metallic glimmer and no dark spots,
2. Analyze on the XRF. Repeated analysis across the sample for carbon must have a standard deviation of 0,05 % on an absolute value of 4,5 - 4,7 % by weight
3. Microscopically research: the structure must be full of austenite needles and must have less as possible graphite islands.

This procedure is duplicated using industrial irons confirming the ability of the capsule material to promote white solidification.

The function of the sampler is as follows. The sampler is immersed in a hot metal vessel through the slag as fast as is possible in order to avoid contaminating the sample chamber with slag which is pushed aside by the cardboard and steel caps. Once the steel cap melts, molten metal enters the mixing chamber which is formed by a ceramic tube and a steel foil, its purpose is to momentarily delay metal entering the sample chamber. In this mixing chamber is a tin capsule with Te powder and a rolled Zr strip. Tin is the preferred choice of capsule material because it has a low melting point (232 °C) and an extreme high boiling point (2623 °C) (no gases) and it is a weak white solidification promoter. Te is well known in the art as a catalyst to promote white solidification by hindering separation of carbon out of the cementite phase upon cooling. Additionally Zr binds to carbon to form ZrC. The high melting point of Zr (1863 °C) which makes the white solidification easier at 1500 °C than at 1350 °C compliments a high superheat metal sampling which normally would have been a problem. The mixed iron will flow in the sample chamber bounded by a ceramic ring and form the final sample by a fast cooling down by chilling of 2 heavy steel plates (4mm thick).

An example of the invention is described as follows, based on the drawings, whereby
Fig. 1 shows a sampler according to the invention,
Fig. 2 shows a sampler with rearward inlet and
Fig. 3 shows a sampler with front inlet.

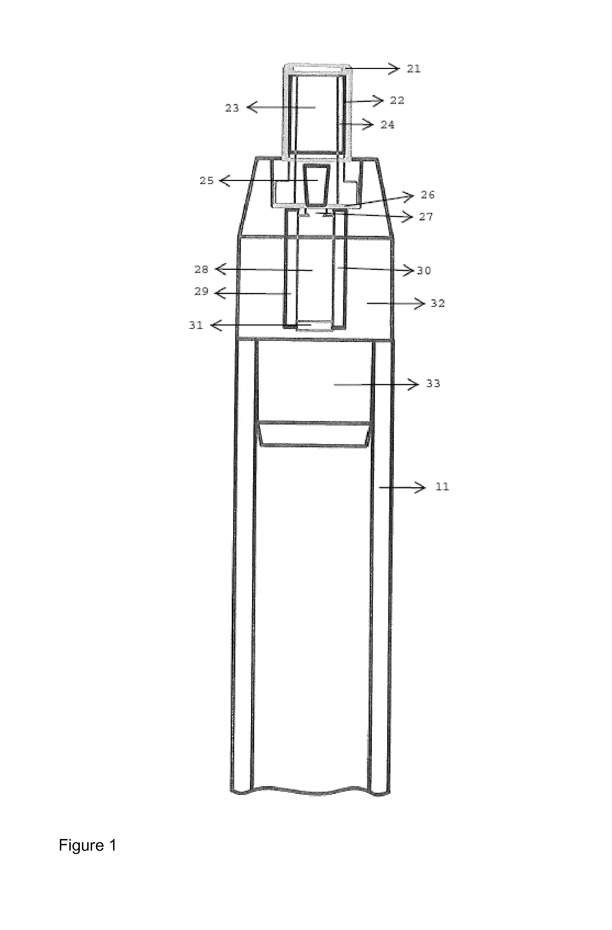

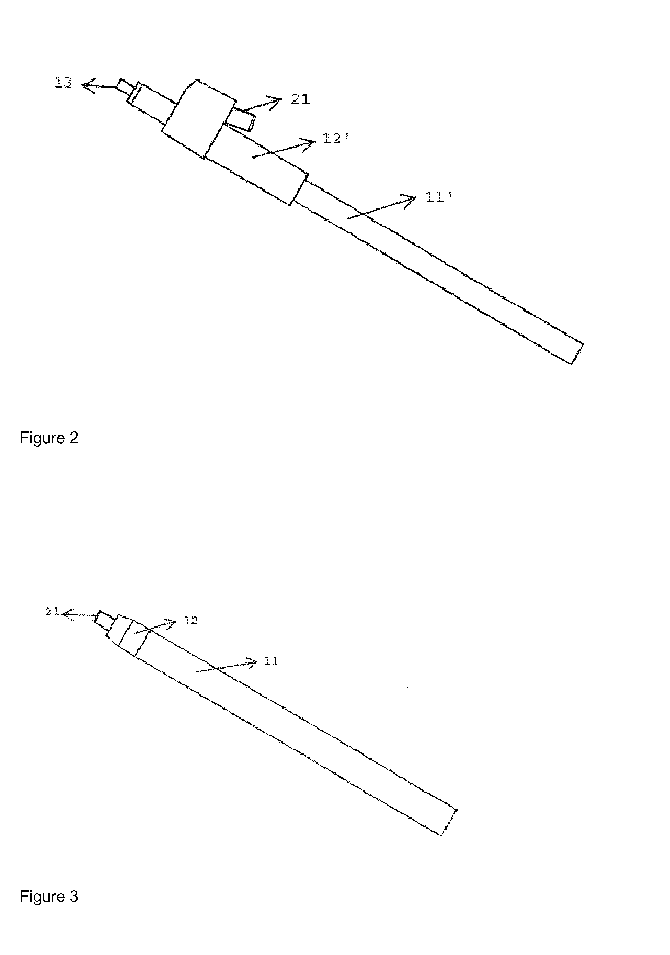

A section 33 of sampling device 10 (shown in Fig. 1), of resin sand insert 12 is pressed into an elongated hollow cardboard tube 11 (shown in Fig. 3) having an open end to receive a metal pole, not shown, and an immersion end 13. End 13 is immersed into liquid steel. A paper cap 21, arranged at an inlet opening, burns and ablates protecting a metal cap 22 from solidifying slag sticking to metal cap 22 as is common for molten metal immersion sampling devices. A slightly different example is shown in Fig. 2, having a rearward inlet into the sampler and a thermocouple 13 arranged at its immersion end. Its resin sand insert 12' is arranged in a cardboard tube 11'.

Once immersed into steel and paper cap 21 consumed, metal cap 22 melts and metal flows through the inlet opening into a mixing cavity 23 bounded by ceramic, or other suitable material housing 24. During filling of the mixing cavity 23, molten metal contacts an alloying capsule 25. Capsule 25 is preferably made of tin, but can be steel, copper or a low melting glass such as borosilicate glass. Capsule 25 contains between 25-75 % by weight of powder or granulated carbide stabilizing material selected from tellurium, bismuth, selenium and cerium, preferably 50 % by weight, the balance consisting of a powdered, granulated or cut strip of a graphite promoter such as zirconium metal and/or zirconium hydride. The approximate weight of the encapsulated material is between 0,4 and 1,4 gram and more preferably between 0,8 and 1,2 gram per 80 grams weight of metal contained in sample chamber 28. Moments after contact with molten metal, the tin of the capsule 25 melts and the powders are dispersed into the liquid as it continues to fill the mixing cavity 23. Opposite the immersion end with the inlet opening of the mixing cavity 23 is a delay steel plate 26 with a thickness between 0,01 and 0,1 mm which delays the filling of a sample chamber 28 facilitating the mixing of alloy capsule powders and the molten metal. One skilled in the art can select other suitable materials for this delay steel plate 26 as long as theses do not contaminate the sample. Once delay steel plate 26 melts the now alloyed contents of the mixing cavity 23 fills chamber 28 through a sample chamber opening 27 and contacts chill steel plates 29 and 30. Opposite the sample chamber opening 27 a ceramic ring 31 is arranged as part of the wall of sample chamber 28. The chill plates 29;30 can be alternate materials that will cause the metal to solidify within seconds of metal entering the chamber. After which, device 10 is withdrawn from the molten metal bath and a forceful tap to body 32, dislodges the now solidified metal sample which is transported to the analytical laboratory for analysis.

## Claims

1. Sampler for molten metal, in particular for molten iron and molten cast iron, comprising a sample chamber having a sample chamber opening and further comprising a mixing chamber having an outer inlet opening, whereby the sample chamber opening is arranged between the mixing chamber and the sample chamber, **characterized in that** a graphite promoter and a carbide stabilizing material selected from one or more of the group consisting of tellurium, bismuth, selenium and cerium are arranged in the mixing chamber.

2. Sampler according to claim 1, **characterized in that** the carbide stabilizing material and the graphite promoter are arranged in a capsule which is arranged in the mixing chamber.

3. Sampler according to claim 2, **characterized in that** the capsule is made of glass or of metal, preferably of a metal having a melting point of up to 1350°C.

4. Sampler according to claim 3 **characterized in that** the capsule is made of tin.

5. Sampler according to one or more of claims 1 to 4, **characterized in that** the graphite promoter is selected from the group consisting of zirconium and zirconium hydride.

6. Sampler according to one or more of claims 1 to 5, **characterized in that** the carbon stabilizing material is present as powder or granules.

7. Sampler according to one or more of claims 1 to 6, **characterized in that** the graphite promoter is present as powder, granules or strips.

8. Sampler according to one or more of claims 1 to 7, **characterized in that** the carbide stabilizing material amounts to 25 - 75 % by weight, preferably to 50 % by weight, of the total amount of the carbide stabilizing material and the graphite promoter.

9. Sampler according to one or more of claims 1 to 8, **characterized in that** the total amount of the carbide stabilizing material and the graphite promoter is 0,5 to 1,75 % by weight, preferably 1 to 1,5 % by weight of the metal contained in the filled sample chamber.

10. Sampler according to one or more of claims 1 to 9, **characterized in that** at the sample chamber opening a delay plate is arranged.

11. Sampler according to claim 10, **characterized in that** the delay plate is made of steel, preferably having a thickness of 0,01 to 0,1 mm.
